(19) **Europäisches Patentamt**

**European Patent Office**

**Office européen des brevets**

(11) **EP 0 923 434 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.⁷: **B27N 7/00**, C09D 5/34, C08L 67/02 // (C08L67/02, 67:02)

(21) Anmeldenummer: **97939998.7**

(22) Anmeldetag: **15.07.1997**

(86) Internationale Anmeldenummer:
**PCT/EP97/03780**

(87) Internationale Veröffentlichungsnummer:
**WO 98/003317 (29.01.1998 Gazette 1998/04)**

(54) **THERMOPLASTISCHE MASSE ZUM AUSFÜLLEN VON POREN IN HOLZWERKSTOFFEN**

THERMOPLASTIC COMPOUND FOR FILLING PORES IN WOODEN MATERIALS

MATIERE THERMOPLASTIQUE POUR REMPLIR LES PORES DE MATERIAUX DERIVES DU BOIS

(84) Benannte Vertragsstaaten:
**AT DE FR IT**

(30) Priorität: **24.07.1996 DE 19629702**

(43) Veröffentlichungstag der Anmeldung:
**23.06.1999 Patentblatt 1999/25**

(73) Patentinhaber:
• **Henkel Kommanditgesellschaft auf Aktien 40589 Düsseldorf-Holthausen (DE)**
• **Degussa-Hüls Aktiengesellschaft 60287 Frankfurt am Main (DE)**

(72) Erfinder:
• **HOFFMANN, Horst D-73441 Bopfingen (DE)**
• **STIEHL, Jutta D-01189 Dresden (DE)**
• **HOPPE, Dirk D-48301 Nottuln (DE)**

(56) Entgegenhaltungen:
**EP-A- 0 576 682       WO-A-96/16777**
**DE-B- 1 180 122**

**Beschreibung**

Die Erfindung betrifft eine thermoplastische Polyester-Masse zum Ausfüllen von Poren in Holzwerkstoffen, insbesondere im Kantenbereich. Eine derartige Polyester - Masse ist aus WO 96/16777 bekannt. Wenn plattenförmige, leistenförmige oder ähnliche Werkstücke aus offenporigen Holzwerkstoffen, wie z.B. Holzspanplatten, oder anderen offenporigen Werkstoffen im Kantenbereich bearbeitet werden, ist in vielen Anwendungsfällen ein Vergüten der Kante erforderlich, da die offenporigen Schnittflächen der Werkstücke eine zu geringe Oberflächenqualität und Festigkeit aufweisen. Es wurden daher verschiedene Verfahren zur Vergütung offenporiger Kanten, beispielsweise von Spanplatten, entwickelt.

So beschreibt die Firma Homag in ihrem Firmenprospekt eine Kantenverdichtung im Durchlaufverfahren. Dieses Verfahren beruht auf dem Ausfüllen der im Kantenbereich von Holzwerkstoffen vorkommenden Hohlräume, die besonders im Bereich der Mittelschicht markant auftreten, so daß eine geschlossene porenfreie und glatte Oberfläche entsteht. Dazu wird ein thermoplastisches Füllmaterial (ein Heißschmelz-Werkstoff) im heißen, pastösen Zustand aufgetragen und in die Poren gedrückt. In der folgenden Kaltphase härtet es aus. Dieser gesamte Prozeß erfolgt - wie von üblichen Kanten-Anleim-Maschinen bekannt - in einem Durchlauf. Die so entstehende Oberfläche wird sofort geglättet und kann auf der gleichen Maschine im weiteren Durchlauf foliert werden. Dieses Durchlaufverfahren besteht aus folgenden Schritten:

1. Vor- und Formfräsen der Profile.
2. Auftrag der thermoplastischen Kantenverdichtungsmasse über ein Walzenauftragsverfahren; dabei liegen die Temperaturen beim Walzenauftrag bei 180 bis 230 °C, vorzugsweise bei 190 bis 220 °C.
3. Nach dem Auftrag der Dichtungsmasse erfolgt ein Glätten mit beheizten Metallschuhen, Temperatur 160 bis 180 °C.
4. Nach dem Glätten wird die verdichtete Kante mit luftgekühlten Metallschuhen gekühlt.
5. Prozeßstufe 2 bis 4 wird wiederholt, so daß eine 2. Schicht aufgebaut wird, wodurch eine porenfreie, glatte Kantenoberfläche erhalten wird.
6. Fräsen der abgekühlten Kantenverdichtungsmasse und beliebige weitere Kantenbearbeitung wie z.B. Prägen mit Heißsiegelfolie, Ummanteln, Postforming und Bedrucken.

Die Geschwindigkeit im Durchlaufverfahren liegt bei 10 bis 30 m/min, vorzugsweise 15 bis 25 m/min.

Folgende Forderungen werden an die thermoplastische Kantenverdichtungsmasse gestellt:

- Die Masse muß bei der Verarbeitungstemperatur ein gutes Fließverhalten aufweisen und sich gut über die Walze in die Spanplattenporen eindrücken lassen.
- Sie soll eine gute Haftung am Spanplattenmaterial aufweisen. Die Masse muß zueinander eine gute Haftung haben (Prozeßstufe 2 bis 4 wird wiederholt), damit beim 2. Auftgrag keine Delamination auftritt.
- Des weiteren muß eine gute Haftung der gehärteten Masse zu Heißsiegelfolien, Klebstoffen und Druckfarben vorhanden sein.
- Die Masse muß bei der Prozeßstufe 4 (Abkühlen) sehr schnell fest und hart werden, da unmittelbar danach gefräst werden muß.
- Die gehärtete Kantenverdichtungsmasse muß eine hohe Schlagfestigkeit aufweisen und darf nicht zum Verspröden neigen.

Zusammenfassend kann also gesagt werden, daß eine thermoplastische Masse gesucht wird, mit der im Durchlaufverfahren Kanten von porösen Holzwerkstoffen vergütet werden können.

Die erfindungsgemäße Lösung ist den Patentansprüchen zu entnehmen. Sie besteht im wesentlichen in der Auswahl von zwei copolyestern bezüglich Schmelzpunkt, Viskositätszahl und Glastemperatur.

Der Erweichungspunkt sollte zwischen 140 und 240 °C, insbesondere zwischen 160 und 200 °C liegen. Der Erweichungspunkt wird in Anlehnung an DIN ISO 4625 bestimmt. Dabei wird die Probe als Schmelze in einen Ring eingegossen und der Ring nach dem Erstarren der Schmelze (bzw. dem Rekristallisieren bei kristallinen Substanzen) in ein Prüfgestell eingelegt. Die Probe wird zentrisch mit einer verchromten Stahlkugel belastet und das Prüfgestell in ein Glycerinbad eingetaucht. Mit einer Aufheizgeschwindigkeit von 5 °C/min wird das Glycerin erwärmt. Als Erweichungspunkt (R/K) wird die Temperatur des Glycerinbades zum Zeitpunkt des Auftreffens der Stahlkugel auf der Grundplatte des Prüfgestells bezeichnet.

Eine gewisse Parallelität zum Erweichungspunkt hat der Schmelzpunkt. Er soll zwischen 120 und 260 °C, insbesondere zwischen 150 und 200 und vor allem zwischen 130 und 180°C liegen. Der Schmelzpunkt wird mit einem DSC-Gerät bestimmt (DIN 53765). Die Probe und ein leeres Referenzpfännchen werden mit 20 °C/min erwärmt. Der Schmelzpunkt entspricht dem Maximum des Schmelzpeaks. Um eine bessere Reproduzierbarkeit zu erzielen, werden in der Regel die Werte der zweiten Aufheizung verwendet.

Die offene Zeit ist ein Maß für die Kristallisationsgeschwindigkeit. Sie sollte zwischen 2 bis 15, insbesondere zwischen 2 und 10 sec betragen. Die offene Zeit wurde nach folgender Methode ermittelt Man streicht hierbei die leicht über den Schmelzpunkt (bzw. bei amorphen Substanzen über den Fließpunkt) erwärrnte Schmelze mit einem Messer auf einen Träger (Papier oder Karton) möglichst gleichmäßig dünn auf. Gemessen wird nun die Zeit vom Aufstreichen der Schmelze bis zum Klebfreiwerden der Filmoberfläche. Bei kristallinen und teilkristallinen Produkten kann dieser Vorgang optisch kontrolliert werden, da hierbei das Abbinden mit dem Rekristallisieren zeitlich identisch ist.

Eine weitere wesentliche Eigenschaft der thermoplastischen Masse ist die Viskositätszahl. Sie soll zwischen 50 und 150, vorzugsweise zwischen 30 und 100 ml/g betragen. Die Messungen erfolgen nach DIN 53728. In 100 ml eines Gemisches aus 50 Gew.-% Phenol und 50 Gew.-% 1,2-Dichlorbenzol werden 0,5 g Substanz gelöst. Die Durchlaufzahl dieser Lösung wird in einem Kapillarviskosimeter nach Ubbelohde bestimmt. Die Viskositätszahl J wird nach folgender Formel bestimmt:

$$J = \frac{t_1}{t_2} \frac{l}{c}$$

$t_1$: Durchlaufzeit der Lösung [s]
$t_2$: Durchlaufzeit des Lösungsmittels [s]
c: Konzentration der untersuchten Substanz [g/cm$^3$].

Eine gewisse Parallelität zu der Viskositätszahl stellt die Schmelzviskosität dar. Sie sollte bei 200 °C im Bereich von 15 bis 250, vorzugsweise im Bereich von 20 bis 150 Pas betragen, gemessen nach Brookfield RVT, DV-II, Sp. 27.

Die erfindungsgemäßen thermoplastischen Massen sind vorzugsweise mittel- oder hoch-kristallin, was z.B. aus der Schmelzenthalpie von mehr als 25, vorzugsweise zwischen 35 und 45 Joule/g bei Copolyestern hervorgeht.

Weiterhin ist erforderlich, daß der Glaspunkt der erfindungsgemäßen thermoplastischen Massen zwischen -70 und +80 °C, vorzugsweise zwischen -50 und +70 °C und vor allem zwischen -10 und 0 °C liegt. Der Glaspunkt wird analog zu dem Schmelzpunkt nach DIN 53765 bestimmt. Im DSC sollten mehrere, insbesondere 2 Glaspunkte festzustellen sein.

Die Polyestermasse besteht aus einem Gemisch aus 5 bis 95 Teilen eiens Copolyesters (CoPES) A und 95 bis 5 Teilen eines Copolyesters (CoPES) B, wobei CoPES A gekennzeichnet ist durch einen Schmelzpunkt von 140 bis 260 °C, vorzugsweise 150 bis 200 °C, eine Viskositätszahl von 50 bis 150 ml/g und eine Glastemperatur von -10 bis 80 °C, vorzugsweise 0 bis 70 °C und CoPES B gekennzeichnet ist durch einen Schmelzpunkt von 120 bis 190 °C, vorzugsweise 130 bis 180 °C, eine Viskositätszahl von 50 bis 150 ml/g sowie eine Glastemperatur von - 70 bis 10 °C, vorzugsweise -50 bis 0 °C.

Die thermoplastische Masse besteht vorzugsweise aus mindestens 2 Komponenten, wobei die erste Komponente eine hohe Kristallinität von 35 bis 45 Joule/g und einen Glaspunkt von über 0 °C und die zweite Komponente eine mittlere bis hohe Kristallinität von 20 bis 45 Joule/g und einen Glaspunkt von unter 0 °C hat.

Insbesondere bevorzugt ist ein Gemisch der CoPES A und B, wobei sowohl CoPES A als auch COPES B dadurch gekennzeichnet sind, daß als Säurekomponente eine oder mehrere aromatische Dicarbonsäuren, sowie fakultativ, eine oder mehrere aliphatische Dicarbonsäuren mit 4 bis 12 C-Atomen eingesetzt werden. Die bevorzugten aromatischen Dicarbonsäuren sind Tere- und Isophthalsäure. Als Diolkomponente werden ein oder mehrere aliphatische Diole mit 2 bis 20, vorzugsweise 2 bis 12 Kohlenstoffatomen eingesetzt. Es können auch maximal 1 Mol% an Tri- und Polycarbonsäuren sowie an Tri- und Polyolen mitverwendet werden, um verzweigte Systeme zu erhalten.

Neben diesen thermoplastischen Polymeren kann die thermoplastische Masse noch weitere Stoffe enthalten, z.B. Füllstoffe, Farbstoffe und Farbpigmente sowie Thermostabilisatoren und Alterungsschutzmittel.

Vorzugsweise setzt sich die erfindungsgemäße thermoplastische Masse aus 50 bis 100 % eines thermoplastischen Polymeren, aus 0 bis 50 % eines Füllstoffes und aus 0,1 bis 1 % eines Thermostabilisators bzw. Alterungsschutzmittels zusammen.

Bei den Füllstoffen handelt es sich um Füllstoffe mit einer Dichte von 2 bis 5 g/cm$^3$, z.B. um Talkum, Titanoxid und insbesondere um Schwerspat und/oder Kreide. Die Ölzahl des Füllstoffes liegt zweckmäßigerweise zwischen 8 und 20 g/100 g und die Mohs-Härte zwischen 2 und 4.

Aus den obengenannten Komponenten werden die thermoplastischen Kantenveredelungsmassen zweckmäßigerweise durch Mischen in der Schmelze bei Massetemperaturen von über 180 °C in einem Kneter oder in einem Doppelschneckenextruder hergestellt.

Die erfindungsgemäßen thermoplastischen Massen werden zweckmäßigerweise mit Hilfe einer Düse, einer Auftragswalze oder eines Transferbandes kontinuierlich auf den Kantenbereich aufgetragen.

Die erfindungsgemäßen thermoplastischen Massen sind für eine Durchlauf-Bearbeitung im Kantenbereich von flächigen, leistenförmigen oder ähnlichen Werkstücken aus offenporigen Holzwerkstoffen und dergleichen vorgesehen, bei der in einem Werkstückdurchlauf, d.h. mit der gleichen Werkstückeinspannung, eine Bearbeitung des Werkstückes im Kantenbereich durch Fräsen und/oder Schleifen, ein sich anschließendes Auftragen einer heißen Vergütungsmasse auf den Kantenbereich sowie ein nachfolgendes Heißeinspachteln der aufgetragenen Vergütungsmasse erfolgt. Das Heißeinspachteln stellt ein gleichmäßiges Eindringen der aufgetragenen Vergütungsmasse in die an der Kante des Werkstückes befindlichen Poren sicher. Ferner wird durch das Heißeinspachteln der Materialverbrauch an aufzutragender Vergütungsmasse minimiert und die Oberfläche, die die Werkstückkante nach Durchlaufen des Heißeinspachtel-Schrittes aufweist, ist bereits von vergleichsweise hoher Qualität, d.h. vergleichsweise glatt.

Bei einer Ausgestaltung des Kanten-Glätt-Verfahrens wird das Auftragen und Heißeinspachteln der Vergütungsmasse während des Durchlaufs einoder mehrmals wiederholt. Mit anderen Worten erfolgt bei der gleichen Einspannung des Werkstückes ein stufenweises Auftragen und Heißeinspachteln der Vergütungsmasse. Durch ein wiederholtes Auftragen und Heißeinspachteln der Vergütungsmasse läßt sich dieser Bearbeitungsschritt beispielsweise in eine Vorvergütung und eine Fertigvergütung aufteilen.

Vorzugsweise folgt auf das Heißeinspachteln der Vergütungsmasse ein Schleifbearbeitungsschritt, z.B. ein Feinschleifen. Dadurch wird die Oberfläche der vergüteten Kante weiter geglättet und mögliche Überstände der aufgetragenen Vergütungsmasse werden beseitigt. Falls das Auftragen und Heißeinspachteln der Vergütungsmasse stufenweise erfolgt, kann jedem Heißeinspachtel-Schritt ein Schleifbearbeitungsschritt nachgeschaltet sein.

Eine weitere Ausgestaltung des Verfahrens besteht darin, zusätzlich eine zweite Vergütungskomponente auf die Vergütungsmasse aufzutragen. Bei dieser zweiten Vergütungskomponente, die auf die gegebenenfalls feingeschliffene Vergütungsmasse aufgetragen wird, kann es sich um eine der ersten Vergütungsmasse ähnliche, jedoch anders zusammengesetzte Vergütungsmasse oder aber um einen Lack oder dergleichen handeln. Eine anders zusammengesetzte Vergütungsmasse könnte beispielsweise Farbpigmente enthalten, um die äußere Vergütungsschicht entsprechend farblich zu gestalten, während beispielsweise mit einem Lack die Oberflächengüte zusätzlich verbessert werden kann.

Falls keine ebenen Kanten des Werkstückes gewünscht werden, sondern profilierte, also z.B. abgerundete Kanten gewünscht werden, ist es zweckmäßig, den Bearbeitungsschritt des Fräsens und/oder Schleifens als Profilfräsen und/oder Profilschleifen auszuführen. Auf diese Weise kann beim gleichen Werkstückdurchlauf mit der gleichen Werkstückeinspannung die Profilierung und die Vorgütung des Werkstückes im Kantenbereich nacheinander erfolgen.

In einer weiteren Ausgestaltung des Verfahrens ist als weiterer, sich im Durchlauf anschließender Bearbeitungsschritt des Werkstückes ein Lackauftrag möglich, an den sich ein Trocknen mit ultravioletter Bestrahlung und ein Schleifen anschließt. Somit kann beim gleichen Werkstückdurchlauf die Profilierung, die Vergütung, gegebenenfalls mit Feinschleifen, sowie eine Lackierung erfolgen.

Eine weitere vorteilhafte Ausgestaltung des Verfahrens besteht darin, während des Durchlaufs als weiteren Bearbeitungsschritt ein Heißprägen anzuschließen, bei dern beispielsweise eine dünne Dekorpapierfolie aufgeprägt wird. Das He ßprägen kann sich beispielsweise unmittelbar an den Bearbeitungsschritt des Vergütens anschließen, oder aber auch an den Bearbeitungsschritt des Lackierens. Bei einer weiteren bevorzugten Ausgestaltung des Verfahrens schließt sich während des Durchlaufs als weiterer Bearbeitungsschritt ein Beleimen mit einem Beschichtungsmaterial, z.B. einem dünnen Dekorpapier, an. Ebenso wie beim Heißprägen kann sich der Bearbeitungsschritt des Beleimens entweder an den Schritt des Vergütens oder an den Schritt des Lackierens anschließen.

In vorteilhafter Weise läßt sich also in einem kontinuierlichen Durchlauf des Werkstückes bei gleichbleibender Werkstückeinspannung der Kantenbereich bearbeiten, vom Profilieren über das Vergüten bis hin zum Lackieren und/ oder Heißprägen bzw. Beleimen mit einem Beschichtungsmaterial.

Die erfindungsgemäß zu verwendenden thermoplastischen Massen ermöglichen nicht nur eine reibungslose Verarbeitbarkeit im Durchlaufverfahren, was vor allem durch die niedrige Verarbeitungsviskosität und die sofortige Nachbearbeitungsmöglichkeit sichergestellt ist, sondern sie bieten auch hohe wertvolle Gebrauchseigenschaften wie einen hohen Erweichungspunkt und eine Schlagfestigkeit.

Die Erfindung wird nun anhand von Beispielen im einzelnen erläutert:

I Ausgangsmaterialien

1. Der lineare, gesättigte Copolyester Dynapol S 361 mit einem Erweichungspunkt von 178 ° C, einem Schmelzpunkt von 175 °C, einem Glaspunkt von -12 °C, einer Viskositätszahl von 82 cm$^3$/g und einer offenen Zeit von 5 sec.

2. Der lineare, gesättigte Polyester Dynapol S 243 mit einem Erweichungspunkt von 194 °C, einem Schmelzpunkt von 192 °C, einem Glaspunkt von 37 °, einer Viskositätszahl von 68 cm$^3$/g und einer offenen Zeit von 6 sec.

3. Der lineare, gesättigte Copolyester Dynapol S 341 mit einem Erweichungspunkt von 155 °C, einem Schmelzpunkt von 150 °C, einem Glaspunkt von -28 °C, einer Viskositätszahl von 66 cm³/g und einer offenen Zeit von 10 sec.

4. Kreide mit einer Ölzahl von 15 bis 20 g/100 g und einer Mohs-Härte von 2 bis 4.

II Herstellung und Eigenschaften der thermoplastischen Massen

Die obengenannten Komponenten werden mit der in der Tabelle angegebenen Zusammensetzung (in Gew.-%) zu den erfindungsgemäßen thermoplastischen Massen in der Schmelze in einem Kneter innerhalb von 1 Stunde gemischt. Ihre Kennwerte sind ebenfalls in der Tabelle angegeben. MFR bedeutet: Schmelzindex (melt flow rate), gemessen gemäß DIN ISO 1133.

Die Werte wurden folgendermaßen erhalten:

| Chargen-Nr. | Dynapol S 243 | Dynapol S 361 | Dynapol S 341 | Kreide | Erw.-Pkt. (Ring + Kugel) [°C] | MFR (200°C) [g/ 10min] | Schmelzvisk. (Brookfield, 200°C) [Pas] |
|---|---|---|---|---|---|---|---|
| 1 | 35 | 35 | | 30 | 193 | 91 | 127 |
| 2 | 35 | | 35 | 30 | 193 | 167 | 64 |
| 3 | 30 | | 30 | 40 | 193 | 114 | 110 |

Alle 3 erfindungsgemäßen Massen ließen sich einwandfrei im Durchlaufverfahren auf Kanten von Spanholzplatten auftragen und ohne Produktionsverzögerung fräsen.

**Patentansprüche**

1. Thermoplastische Polyester-Masse zur Verwendung bei einem Verfahren zum Ausfüllen von Poren in Holzwerkstoffen, insbesondere im Kantenbereich, durch Heißspachteln, die einen Erweichungspunkt von über 100°C, eine kurze offene Zeit und eine für das Eindringen in die Poren geeignete Viskosität aufweist, **dadurch gekennzeichnet, daß** die thermoplastische Polyester-Masse zwei verschiedene Copolyester (CoPES) A und B in einem Gewichtsverhältnis von 5 bis 95 % des Copolyesters A zu 95 bis 5 % des Copolyesters B enthält, wobei CoPES A einen Schmelzpunkt von 140 bis 260 °C, gemessen nach DIN 53765, eine Viskositätszahl von 50 bis 150 ml/g, gemessen nach DIN 53728 und eine Glastemperatur von -10 bis 80 °C, gemessen nach DIN 53765, aufweist und CoPES B einen Schmelzpunkt von 120 bis 190 °C, gemessen nach DIN 53765, eine Viskositätszahl von 50 bis 150 ml/g sowie eine Glastemperatur von -70 bis 10 °C, gemessen nach DIN 53765, aufweist.

2. Polyester-Masse nach Anspruch 1, **dadurch gekennzeichnet, daß** die Masse einen Glaspunkt von -70 bis +80 °C hat.

3. Polyester-Masse nach Anspruch 1, **dadurch gekennzeichnet, daß** die Masse mittel- oder hochkristallin ist, gemessen aufgrund der Schmelzenthalpie von mehr als 25 Joule/g.

4. Polyester-Masse nach Anspruch 1, **dadurch gekennzeichnet, daß** ihre Schmelzviskosität bei 200 °C nach Brookfield 15 bis 250 Pas beträgt.

5. Polyester-Masse nach mindestens einem der Ansprüche 1 bis 4, **dadurch gekennzeichnet, daß** die Masse zwei Copolyester-Komponenten enthält, wobei die Komponente a) eine hohe Kristallinität von 35 bis 45 Joule/g und einen Glaspunkt von über 0 °C hat und wobei die andere Komponente b) eine mittlere bis hohe Viskosität von 20 bis 45 Joule/g und einen Glaspunkt von unter 0 °C hat.

6. Polyester-Masse nach mindestens einem der Ansprüche 1 bis 5, **dadurch gekennzeichnet, daß** der CoPES A einen Schmelzpunkt von 150 bis 200 °C, gemessen nach DIN 53765, eine Viskositätszahl von 50 bis 150 ml/g, gemessen nach DIN 53728 und eine Glastemperatur von 0 bis 70 °C, gemessen nach DIN 53765, und CoPES B einen Schmelzpunkt von 130 bis 180°C, gemessen nach DIN 53765, eine Viskositätszahl von 50 bis 150 ml/g sowie eine Glastemperatur von -50 bis 0 °C, gemessen nach DIN 53765, aufweist.

7. Polyester-Masse nach mindestens einem der Ansprüche 1 bis 6, **dadurch gekennzeichnet, daß** sie noch bis zu 50 Gew.-% an Füllstoffen enthält.

**8.** Polyester-Masse nach einem der Ansprüche 6 und 7, **dadurch gekennzeichnet, daß** sowohl der CoPES A als auch der CoPES B als Säurekomponente eine oder mehrere aromatische Dicarbonsäuren und als Diolkomponente ein oder mehrere aliphatische Diole mit 2 bis 20, vorzugsweise 2 bis 12 Kohlenstoffatomen enthält.

## Claims

**1.** A thermoplastic polyester compound for use in a process for filling pores in wood materials, particularly in and around edges, by hot knifing, said compound having a softening point above 100°C, a short open time and a suitable viscosity for penetration into the pores, **characterized in that** the thermoplastic polyester compound contains two different copolyesters (CoPES) A and B in a ratio by weight of 5 to 95% of copolyester A to 95 to 5% of copolyester B, CoPES A having a melting point of 140 to 260°C, as measured to DIN 53675, a viscosity number of 50 to 150 ml/g, as measured to DIN 53728, and a glass temperature of -10 to 80°C, as measured to DIN 53765, and CoPES B having a melting point of 120 to 190°C, as measured to DIN 53675, a viscosity number of 50 to 150 ml/g and a glass temperature of -70 to 10°C, as measured to DIN 53765.

**2.** A polyester compound as claimed in claim 1, **characterized in that** it has a glass point of -70 to +80°C.

**3.** A polyester compound as claimed in claim 1, **characterized in that** it has medium to high crystallinity as measured on the basis of the enthalpy of fusion of more than 25 joules/g.

**4.** A polyester compound as claimed in claim 1, **characterized in that** it has a Brookfield melt viscosity at 200°C of 15 to 250 Pas.

**5.** A polyester compound as claimed in at least one of claims 1 to 4, **characterized in that** the compound contains two copolyester components, component a) having a high crystallinity of 35 to 45 joules/g and a glass point above 0°C and the other component b) having a medium to high viscosity of 20 to 45 joules/g and a glass point below 0°C.

**6.** A polyester compound as claimed in at least one of claims 1 to 5, **characterized in that** CoPES A has a melting point of 150 to 200°C, as measured to DIN 53675, a viscosity number of 50 to 150 ml/g, as measured to DIN 53728, and a glass temperature of 0 to 70°C, as measured to DIN 53765, and CoPES B has a melting point of 130 to 180°C, as measured to DIN 53675, a viscosity number of 50 to 150 ml/g and a glass temperature of -50 to 0°C, as measured to DIN 53765.

**7.** A polyester compound as claimed in at least one of claims 1 to 6, **characterized in that** it also contains up to 50% by weight of fillers.

**8.** A polyester compound as claimed in claim 6 or 7, **characterized in that** both CoPES A and CoPES B contain one or more aromatic dicarboxylic acids as acid component and one or more aliphatic diols containing 2 to 20 and preferably 2 to 12 carbon atoms as diol component.

## Revendications

**1.** Masse de polyester thermoplastique pour l'utilisation dans un procédé de remplissage de pores dans des matériaux en bois, en particulier dans la zone des bords par une spatule de bouchage à chaud, qui possède un point de ramollissement de plus de 100°C, un temps ouvert court et une viscosité adéquate pour la pénétration dans les pores,
**caractérisée en ce que**
la masse de polyester thermoplastique contient deux copolyesters différents (CoPES) A et B dans un rapport en poids de 5 à 95 % du copolymère A pour 95 à 5 % du copolyester B, le CoPES A ayant un point de fusion allant de 140 à 260 °C, mesuré selon la norme DIN 53765, un indice de viscosité de 50 à 150 ml/g mesuré selon la norme DIN 53728, et une température vitreuse de -10 à 80°C mesurée selon la norme DIN 53765 et le CoPES B ayant un point de fusion allant de 120 à 190°C, mesuré selon la norme DIN 53 765, un indice de viscosité de 50 à 150 ml/g, ainsi qu'une température vitreuse de -70 à 10°C mesurée selon la norme DIN 53765.

**2.** Masse de polyester selon la revendication 1,
**caractérisée en ce que**

la masse a un point vitreux de -70 à + 80°C.

3.  Masse de polyester selon la revendication 1,
    **caractérisée en ce que**
    la masse est moyennement ou hautement cristalline, mesurée sur la base de l'enthalpie de fusion de plus de 25 joules/g.

4.  Masse de polyester selon la revendication 1,
    **caractérisée en ce que**
    sa viscosité à la fusion s'élève à 200°C selon Brookfield à 15 à 250 Pas.

5.  Masse de polyester selon au moins l'une quelconque des revendications 1 à 4,
    **caractérisée en ce que**
    la masse contient deux composants de copolyester, dont le composant a) a une haute cristallinité de 35 à 45 joules/g et un point vitreux supérieur à 0°C et l'autre composant b) a une viscosité cristallinité moyenne à élevée de 20 à 45 joules/g et un point vitreux inférieur à 0°C.

6.  Masse de polyester selon au moins l'une quelconque des revendications 1 à 5,
    **caractérisée en ce que**
    le CoPES A possède un point de fusion de 150 à 200°C mesurée selon la norme DIN 53765, un indice de viscosité de 50 à 150 ml/g mesuré selon la norme DIN 53728, et une température vitreuse allant de 0 à 70°C, mesurée selon la norme DIN 53765, et le CoPES B possède un point de fusion de 130 à 180°C mesuré selon la norme 53765, un indice de viscosité de 50 à 150 ml/g ainsi qu'une température vitreuse de -50 à 0°C mesurée selon la norme DIN 53765.

7.  Masse de polyester selon au moins l'une quelconque des revendications 1 à 6,
    **caractérisée en ce qu'**
    elle contient encore jusqu'à 50 % en poids de substances de charge.

8.  Masse de polyester selon l'une des revendications 6 et 7,
    **caractérisée en ce que**
    aussi bien le CoPES A que le CoPES B contient comme composant acide, un ou plusieurs acides dicarboxyliques aromatiques et comme composant diol un ou plusieurs diols aliphatiques ayant de 2 à 20, de préférence de 2 à 12 atomes de carbone.